# EUROPEAN PATENT APPLICATION

(11) **EP 1 903 257 A2**
(43) Date of publication of application: **26.03.2008**
(21) Application number: 07002664.6
(22) Date of filing: 24.02.2003
(51) Int. Cl.: F16H 37/02, F16H 9/18

(54) **Three-wheeled vehicle with a continously variable transmission**

(30) Priority: 22.02.2002 US 358400 P; 22.02.2002 US 358398 P
(62) Divisional of application: 03704129.0
(71) Applicant: Bombardier Recreational Products Inc., Valcourt, Québec J0E 2L0 (CA)
(72) Inventor: Fecteau, Berthold, Richmond Québec J1B 2HO (CA); Girouard, Bruno, Montreal Québec H2T 2T4 (CA)
(74) Representative: Solf, Alexander

(57) **Abstract**

A three-wheeled vehicle, comprising:
a tubular frame;
an engine supported by the frame;
a rear suspension swing arm pivotally connected to the frame;
a pair of front wheels supported by the frame and a single rear wheel supported by the rear swing arm, the rear wheel being operatively connected to the engine such that the engine drives the rear wheel;
tires mounted on each of the wheels, wherein the tires are suitable for road use;
a straddle seat supported by the frame disposed between the front wheels and the rear wheel; and
a continuously variable transmission (CVT) operatively connected between the engine and the rear wheel wherein the continuously variable transmission comprises a drive pulley adapted to connect to a crankshaft of the engine, a driven pulley connected to an output shaft, and a belt having a first side and a second opposed side operatively connected between the drive pulley and the driven pulley, wherein the drive pulley comprises:
a drive pulley inner half rotatably disposed on the crankshaft, the drive pulley inner half having a belt engagement surface associated therewith adapted to engage the first side of the belt ,
a drive pulley outer half rotatably disposed on the crankshaft, the drive pulley outer half having a belt engagement surface associated therewith adapted to engage the second side of the belt, and
wherein the driven pulley comprises:
a driven pulley inner half disposed on an axle , the driven pulley inner half having a belt engagement surface associated therewith adapted to engage the first side of a belt,
a driven pulley outer half disposed on the axle, the driven pulley outer half having a belt engagement surface associated therewith adapted to engage the second side of the belt, and
a spring biasing the driven pulley inner half and the driven pulley outer half together with one another, or a gear box operatively connected between the CVT and the rear wheel to provide a gear reduction therebetween, or an inner chamber formed between the driven pulley inner half and the driven pulley outer half, the inner chamber being sealed from the atmosphere such that fluid pressure created within the inner chamber can move the driven pulley inner half with respect to the driven pulley outer half.

## Description

### CROSS REFERENCE TO RELATED APPLICATION

This application claims priority to U.S. Provisional Patent Application Nos. 60/358,400 and 601358,398, both filed February 22, 2002. These applications are hereby incorporated by reference herein. This application is also a continuation-in-part of U.S. Serial No. 09/944,159. the contents of which are incorporated by reference herein.

This application is also related but does not claim priority to the following U.S. provisional applications that were filed on February 22, 2002: No. 60/358,394; No. 60/358,390; No. 60/358,395; No. 60/358,436; No. 60/358,397; and No. 601358,439 and any non-provisional patent applications claiming priority to the same. This application is also related but does not claim priority to U.S. provisional application No. 60/358,737 filed on February 25, 2002, and U.S. provisional application No. 601418,355, which was filed on October 16, 2002 and any non-provisional patent applications claiming priority to the same. The entirety of the subject matter of these applications is incorporated by reference herein.

This application is also related to but does not claim priority to U.S. Design Application 29/155,964 filed on February 22,2002, and U.S. Design Application 29/156,028 filed on February 23, 2002. This application is also related to but does not claim priority to U.S. Patent Application No. 10/346,188 and U.S. Patent Application No. 10/346,189 which were filed on January 17, 2003. The entirety of the subject matter of these applications is incorporated by reference herein.

### BACKGROUND OF THE INVENTION

### 1. Field of the Invention

This invention relates to vehicles, particularly vehicles designed for road use. Specifically, this invention is directed to three-wheeled vehicles driven by a power unit. In particular, this invention relates to a transmission system for such a vehicle.

### 2. Background of the Invention

Known three-wheeled vehicles are typically designed as all terrain vehicles or as snowmobiles that have been modified to include wheels. Three-wheeled ail terrain vehicles are traditionally designed with one wheel in front and two wheels in the rear, while snowmobiles have been adapted to run on wheels with a pair of front wheels and a single rear wheel. In the past, these vehicles have suffered from instability and/or poor performance and handling characteristics. As a result, these vehicles are not suitable for road use.

For example, U.S. Pat. No. 4,787,470 discloses a three-wheel vehicle with two front wheels and a sole rear wheel having a body formed by an all terrain vehicle (ATV) frame carrying two front fenders and one rear fender and a saddle type seat. An engine Is supported on the frame but is exposed to the exterior of the vehicle body, as is common for motorcycles. In such a vehicle, the center of gravity of the rider and the vehicle are quite a distance above the ground.

United States Patent No. 4,662,468 also discloses a three-wheel vehicle with two front wheels and a sole rear wheel. The three-wheel vehicle of the '468 patent uses a conventional snowmobile chassis, which has been modified to include two driving wheels at its front portion.

United States Patent No. 5,564,517 discloses a snowmobile conversion frame kit which includes a frame having two wheels with a steering assembly in the front and a rear wheel with a swing arm in the rear. The kit shown and described in the '517 patent is designed to be secured to a conventional snowmobile chassis. The conventional snowmobile chassis offers less rigidity and structural strength than are required for ATVs.

As these and other prior art three wheeled vehicles are not designed for high performance road use, the powerplant in place in these vehicles has not been adapted for a three-wheeled high performance road vehicle.

The demands of high performance road vehicles include rapid acceleration, a wide range of gears, and reliable and smooth shifting between gears. The powerplant must be sufficient to drive the vehicle at high speeds for extended periods of time. Such a powerplant must be connected to a reliable, flexible transmission to efficiently change gears during operation.

Conventional engines have a narrow rpm (revolutions per minute) range in which horsepower, (hp) and torque are at their maximum efficiency. Vehicles have multiple gears to take advantage of the most desirable rpm range depending on the desired speed of the vehicle. Shifting between gears allows the engine to stay below the maximum rpm limit and near the rpm band of best performance at different speeds. The transmission allows the gear ratio between the engine and the driven wheel(s) to change as the vehicle speeds up and slows down. For peak performance, and especially to accommodate the performance demands during road use, a vehicle should have a transmission that allows the engine to run at its single best performance rpm value. Conventional transmissions do not provide maximum flexibility that would be desired in a high performance vehicle.

Accordingly, there is a need for a three-wheeled vehicle, especially suitable for road use, that has a transmission that can accommodate high performance.

### SUMMARY OF THE INVENTION

An aspect of this invention is to provide a three-wheeled straddle type vehicle having two wheels in the front of the vehicle and one wheel in the rear of the vehicle.

Another aspect of this invention provides a three-wheeled straddle type vehicle designed for road use. Off-road use is also contemplated, but it is not the primary focus of the design.

An additional aspect of this invention is to provide a three-wheeled straddle type vehicle having a high performance transmission associated with the drive system of the vehicle.

The vehicle in accordance with this invention is a three-wheeled straddle type vehicle that is designed with sufficient structural rigidity that it may operate as a high performance road vehicle. The vehicle may include an engine with an output power of 80-135 or more horsepower. A continuously variable transmission (CVT) is provided in connection with the engine to transmit engine power to the drive assembly of the three-wheeled vehicle.

A CVT is considered to be superior to a traditional geared transmission because, unlike a traditional gearbox that provides four or five separate gears, a CVT provides an infinite number of different "gears." As a result, CVTs are much more efficient at transmitting torque from the engine to the output shaft of the transmission.

A CVT operates in general with a V-shaped drive belt that is supported by a drive pulley having a tapered belt engaging surface. In operation, the torque from the engine is transferred from the drive pulley to a driven element. When the engine is operating at low speed, the belt engages the tapered surface and slides radially along the drive pulley to effect a change in "gears."

In a three-wheeled vehicle according to the invention, the driver may need to shift his or her weight when turning to facilitate turning, especially at high speeds. Unlike motorcycles, where the entire vehicle leans in a turn, the driver on a three-wheeled vehicle often will needto shift his or her weight on the vehicle to lean into the turn. This can complicate foot shifting. Use of a CVT eliminates this complication.

The three-wheeled vehicle in accordance with this invention comprises a frame, an engine mounted to the frame, a pair of front wheels supported by the frame and a single rear wheel supported by the frame. The rear wheel is operatively connected to the engine such that the engine drives the rear wheel. Alternatively, the vehicle could be designed for front wheel drive. Tires are mounted on each of the wheels, and the tires are suitable for road use. A straddle-type seat Is supported by the frame and is disposed between the front wheels and the rear wheel. A CVT is operatively connected to the engine.

Other objects, aspects and features of the invention will be apparent in view of the following description and drawings.

### BRIEF DESCRIPTION OF THE DRAWINGS

Referring to the drawings that form a part of the original disclosure:
Fig. 1 is a front view of the three-wheeled straddle-type vehicle in accordance with a preferred embodiment of the invention;
Fig. 2 is a right side view of the three-wheeled vehicle of Fig.1;
Fig. 3 is a top view of the three-wheeled vehicle of Fig. 1;
Fig. 4 is a front left perspective view of the frame assembly for the three-wheeled vehicle in accordance with the preferred embodiment of this invention;
Fig. 5 is left side view of the frame assembly of the three-wheeled vehicle, illustrated in Fig. 4, showing the rear wheel and rear swing arm assembly attached thereto;
Fig. 6 is a partial view of the connection between the transmission and the rear swing arm assembly of Fig. 5;
Fig. 7 is a schematic illustration of the connection between the engine and the transmission;
Fig. 7A is a schematic illustration of an alternative drive belt connection;
Fig. 7B is a schematic illustration of another alternative transmission shaft connection;
Fig. 8 is an exploded, perspective illustration of the CVT of the engine of the present invention;
Fig. 9 is a cross-sectional side view Illustration of the drive pulley of the CVT in a state where the engine Is operating at low speed;
Fig. 10 is a cross-sertional side view illustration of the driven pulley of the CVT in a state where the engine ls operating at low speed;
Fig. 11 is a cross-sectional side view illustration of the drive pulley of the CVT in a state where the engine Is operating at high speed;
Fg. 12 is a cross-sectional side view illustration of the driven pulley of the CVT in a state where the engine is operating at high speed;
Fig. 13 is an enlarged cross-sectional view of a portion of the drive pulley of the CVT in a state where the engine Is operating at low speed;
Fig.14 is a cross-sectional side view illustration of the slide sleeve from the drive pulley of the CVT of the present invention;
Fig. 15 is a top view of the slide sleeve from the drive pulley of the CVT of the present invention;
Fig. 16 is a perspective, side-view of the slide sleeve of the drive pulley of the CVT of the present invention;
Fig. 17 is a perspective illustration of the guide member element of the driven pulley of the CVT of the present invention;
Fig.18 is a perspective illustration of the connector of the driven pulley of the CVT of the present invention;
Fig.19 is a perspective illustration of the inner half of the driven pulley of the CVT of the present invention;
Fig. 20 is a rear view illustration of the inner half of the driven pulley of the CVT of the present invention;
Fig. 21 is an enlarged, top view illustration of an alternate embodiment of one of the centrifugal weights pivotally attached to the outer half of the driven half of the CVT of the present invention; and
Fig. 22 is a cross-secfional side view illustration of an alternative driven pulley for the CVT of the present invention, showing the construction for a pneumatically-operated driven pulley.

### DETAILED DESCRIPTION OF THE INVENTION

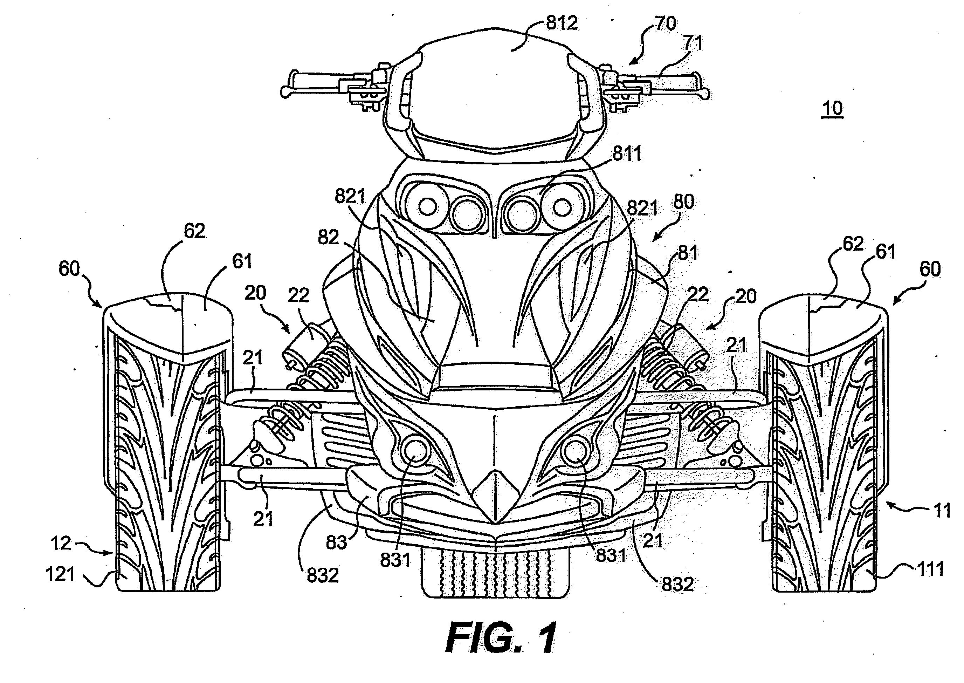

A three-wheel straddle type vehicle 10 in accordance with the present invention is generally illustrated in Figs. 1-3. The vehicle 10 Is designed with a straddle-type seat assembly 90 that preferably accommodates two adult-sized riders, a driver and a passenger. While the vehicle 10 is not designed to accommodate more than two adult-sized riders, the present invention contemplates that the design of vehicle 10 may be changed easily to accommodate more than two adult-sized riders.

It should be noted that the conventions "left," "right," "front," "rear," "up," and "down" are defined according to the normal, forward travel direction of the vehicle 10. As a result, the "left" side of the vehicle 10 corresponds to the left side of a rider seated in a forward-facing position on the vehicle 10.

The vehicle 10 is designed along a longitudinal axis and includes a left front wheel 11, a right front wheel 12 and a rear wheel 13. The front wheels 11 and 12 are equally offset from the longitudinal axis, and the rear wheel is aligned with the longitudinal axis. The left and right front wheels 11 and 12 have tires 111 and 121 secured thereto, respectively. The rear wheel 93 has tire 131 secured thereto. The rear wheel 13 may include multiple rims, with each rim accommodating a tire. In the case of a multi-rim arrangement, the rims would be rigidly connected to form a single wheel. For purposes of simplicity, when the rear tire is referred to in this application, it will be understood that the rear tire may include multiple tire components mounted on individual rims but acting as a single wheel.

The tires 111, 121, 131 have a friction coefficient in accordance with the tire manufacturers specifications. Preferably, each of the wheels 11, 12 and 13 is sized to accommodate a 15-inch automobile tire. The present invention, however, is not limited to equal sized wheels; rather, It is contemplated that the front wheels 11 and 12 may be smaller in size to accommodate a 13-inch automobile tires. Furthermore, other wheel sizes are considered to be well within the scope of the present invention.

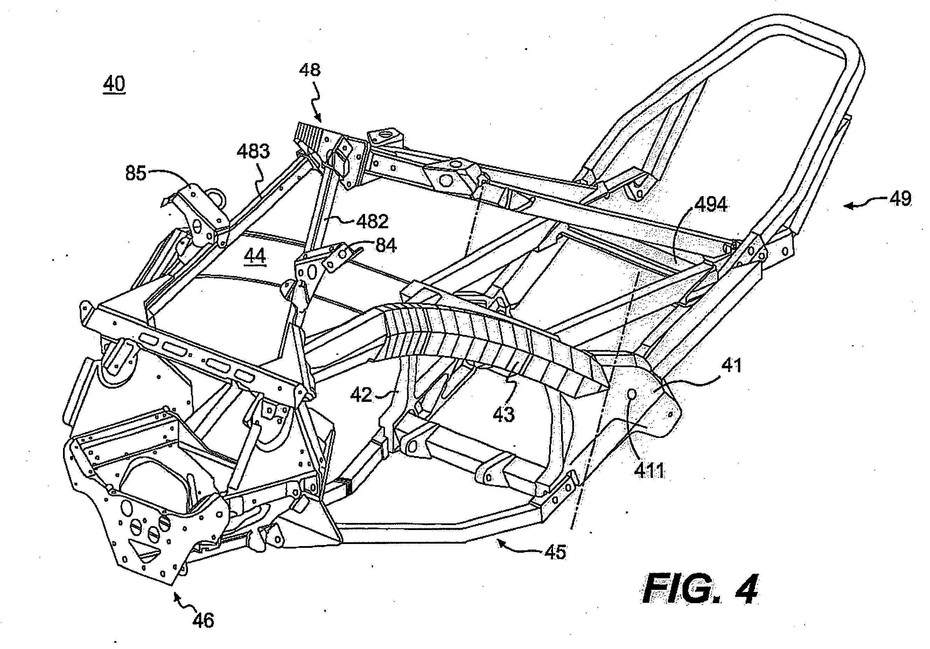

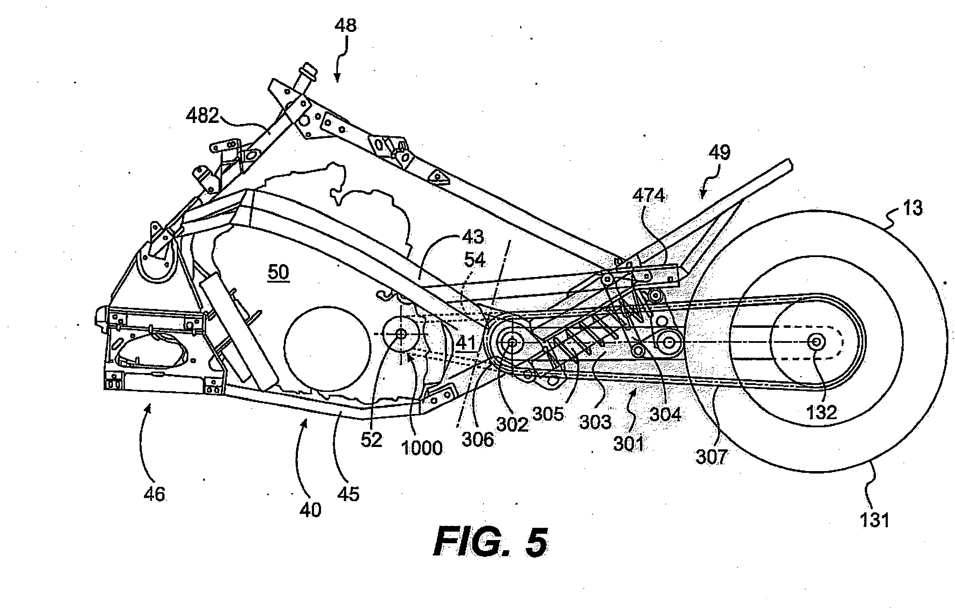

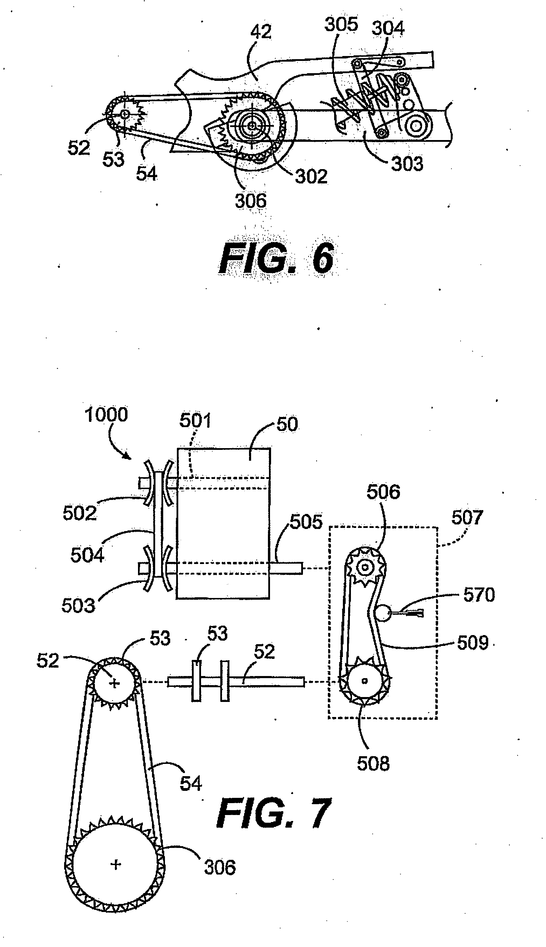

The front wheels 11 and 12 are supported by a front suspension assembly 20. The rear wheel 13 is supported by a rear suspension assembly 30. The front suspension assembly 20 and the rear suspension assembly 30 are secured to a vehicle frame assembly 40, illustrated in Fig. 4. The front suspension assembly 20 includes a pair of suspension support arms (A-arms) 21 and a shock absorber 22 extending from each side of the frame assembly 40 to support each front wheel 11 and 12. The rear suspension assembly 30 includes a rear swing arm assembly 301 that is attached to the frame assembly 40 by an axle 302, that extends through the frame assembly 40, as seen in Figs. 5 and 6.

As shown in Fig. 4, the frame assembly 40 of the vehicle 10 includes left and right laterally-spaced rear suspension plates 41 and 42. The rear suspension plates 41 and 42 generally form vertically and longitudinally extending reinforced plates. The suspension plates 41 and 42 are preferably made of a strong light material such as cast aluminum. Left and right laterally extending swing arm pivot bores 411 (only one being shown) are centrally disposed on each suspension plate 41 and 42 to accommodate pivotal mounting of the rear suspension swing arm assembly 301.

As shown in Fig. 5, the rear swing arm assembly 301 includes a rear swing arm 303 that is pivotally supported by the axle 302, which is retained in pivot bore 411. The swing arm 303 is formed in a generally U-shape with a pair of parallel arm portions, that extend rearwardly from the axle 302 to the rear tire 13. The rear swing arm 303 is suspended from the frame assembly 40 by a linkage system 304 and Is biased by a shock absorber 305. By this arrangement, the rear wheel 13 has a controlled range of pivotal movement about a lateral axis with respect to the frame assembly 40.

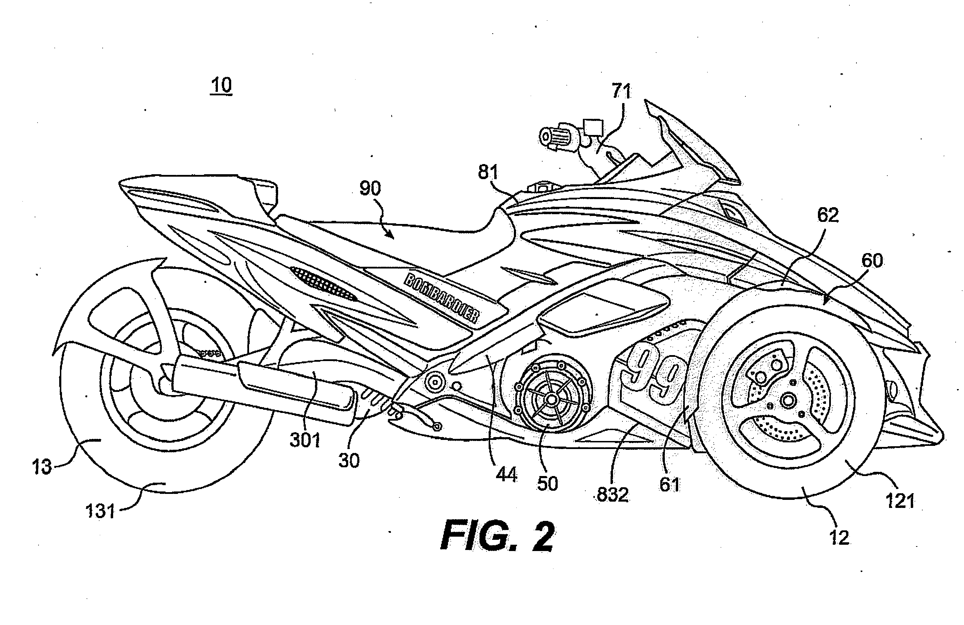

Referring back to Fig. 4 and the frame assembly 40, laterally-spaced left and right spars 43 and 44 extend upwardly and forwardly from upper forward portions of the left and right rear suspension plates 41 and 42, respectively. As illustrated in Fig. 2, the outer side of the frame spar 44 is visible from the right side of the vehicle 10. Preferably, the frame assembly 40 is a tubular frame, with at least some of the frame elements being formed of tubular members. The tubular members can have any cross section, including but not limited to square, rectangular, circular, oval and channel shaped. As such, tubular members contemplated by this invention include both closed and open cross sections, which may be made by casting, forging, stamping, or extrusion. The advantage of tubular members Is that such elements are very strong, yet lightweight.

An engine 50 is secured to the vehicle frame assembly 40 adjacent to an engine cradle assembly 45, as described with reference to Fig. 5. The engine 50 may be secured directly to the frame assembly 40 at several points of attachment, Alternatively, the engine 50 may be secured to the frame assembly 40 using a suitable mounting assembly, not shown. The engine 50 can be a structural element of the frame assembly 40 adding rigidity. Alternatively, the engine 50 may be merely supported by the frame assembly 40.

As Figs. 4 and 5 illustrate, the engine 50 is supported just behind the front suspension assembly 20 immediately above the lowest part of the frame assembly 40. This positioning provides a low center of gravity, which is useful in ensuring good handling and stability of the vehicle 10. Because of the rigidity and improved structural strength of the frame assembly 40, the engine 50 can generate 80-135 horsepower or more without sacrificing stability and/or maneuverability of the vehicle 10. The frame assembly 40 provides sufficient structural rigidity to withstand the forces created during high performance operation of the vehicle 10.

The engine 50 includes an internal combustion engine and is preferably a four-stroke engine. In particular, the engine 50 may be a 1000cc V-twin (V2) four-stroke engine manufactured by ROTAX^{®}. The vehicle 10 in accordance with the present invention, however, is not limited to a 1000cc engine. It is also contemplated that a 600cc engine may be used. Furthermore, other engine displacement sizes are considered to be well within the scope of the present invention. Moreover, while a four-stroke engine is contemplated for use on the vehicle 10, a two-stroke engine also may be employed. Alternatively, the engine 50 may be an electric motor.

The engine 50 is preferably connected to a CVT, which is discussed in detail below. Alternatively, the three-wheeled vehicle 10 may utilize a manual speed transmission with a clutch in a manner similar to those available on typical motorcycles.

A fender assembly 60 is associated with each of the front wheels 11 and 12. As shown in Figs. 1 and 2, each fender assembly 60 includes a cover assembly 61 that covers the top rear portion of the tires 111 and 121. The fender assembly 60 prevents dirt, water and road debris from being kicked up onto the rider, while the rider operates the vehicle 10. Each fender assembly 60 is linked to the front suspension assembly 20 and a steering assembly 70 such that the cover assemblies 61 move with the wheels 11 and 12 during steering of vehicle. This arrangement ensures that the tires 111 and 121 will not kick up dirt, water and road debris at the operator as the vehicle 10 turns. Each fender assembly 60 preferably includes a turn signal 62 located on the top surface of each cover assembly 61, as shown in Figs. 1-3.

The steering of the front wheels 11 and 12 is accomplished through the use of the steering assembly 70. The steering assembly 70 includes handlebars 71 and steering linkages (not shown) connected to the wheels 11 and 12 for purposes of turning the wheels 11 and 12 in response to movement of the handlebars 71. The steering assembly 70 of the vehicle 10 is preferably provided with a progressive steering system (not shown). The progressive steering system allows the handlebars 71 to be turned to their maximum position (up to about 50 degrees of arc), while the wheels 11 and 12 turn to an increasingly greater extent. The linkage between the handle bars 71 and the steering linkages that makes progressive steering possible are designed so that small variations in the handlebars 71 when the vehicle 10 is traveling straight will not turn the wheels 11, 12 to any significant degree. In other words, when the vehicle 10 is traveling forward, especially at high speed, there should be a good amount of play in the handlebars 71 so that small movements made by the driver do not result in a sudden (or unexpected) turning of the vehicle 10. On the other hand, when the handlebars 71 are turned to a more significant displacement, the degree of play preferably should decrease as the angular displacement of the handlebars 71 increases. The closer the handlebars 71 are turned to their most rotated position, the less play there should be in the linkage between the handlebars 71 and the wheels 11, 12 of the vehicle 10.

The front of the vehicle 10 includes a fairing assembly 80, which encloses the engine 50 to protect it and to provide an external shell that can be decorated so that the vehicle 10 is aesthetically pleasing. The fairing assembly 80 is preferably made from fiberglass having a gel coat, although other materials including plastic are considered to fall within the scope of the invention. The fairing assembly 80 includes an upper portion 81, a hood 82 removably secured to the upper portion 81 and a bottom pan 83. The fairing assembly 80 is secured to the vehicle frame assembly 40 by a plurality of fairing anchors. At least two falring anchors 84 and 85 are illustrated.

The hood 82 includes at least one air intake opening 821 to provide a supply of air to an air box (not shown) for supplying air to the air intake of the engine 50 and/or to an oil cooler (not shown). As previously mentioned, the hood 82 is removable to permit access to an interior storage compartment located in the front portion of the vehicle 10. The storage compartment offers the driver a place to store personal belongings when the vehicle 10 is parked in a public location. The hood 82 may be locked. The storage compartment is removable to permit access to the engine 50. The upper portion 81 of the fairing assembly 80 further includes a cluster of headlamps 811. A windshield 812 may be connected to the steering assembly 70, as shown in FIg. 1.

The bottom pan 83 of the fairing assembly 80 may also include one or more fog lamps 831. The bottom pan 83 has a pair of lateral extensions protruding outwardly, which form radiator covers 832. The radiator covers 832 surround and protect a pair of laterally spaced radiator assemblies, which together form a radiator for the engine 50. The radiator covers 832 also function to provide a windbreak for the feet and lower legs of the driver. The radiators permit liquid cooling of the engine 50. The liquid coolant is cooled by air, as is known in the art, and may additionally aided by an automatic fan installed ahead of (or behind) the radiator when the vehicle 10 is idling for an extended period of time.

The vehicle 10 includes a cushioned rider seat assembly 90 that is mounted to the frame assembly 40 between the front wheels 11 and 12 and the rear wheel 13, as shown in Figs. 1-3. The seat assembly 90 is connected to an upper support assembly 48 and a seat support assembly 49 of the vehicle frame assembly 40, as shown in Fig. 4. The seat assembly 90 Is positioned so that a weight of the rider thereon will be disposed generally above the rear suspension links of the frame assembly 40. Consequently, the weight of the rider will be transferred through the seat assembly 90 and frame assembly 40 to the rear suspension link 494, and from the rear suspension link 494 to the rear suspension assembly 30, and to the front suspension sub-frame 46 and front suspension assembly 20 through the front supports 482 and 483 at least to some degree.

Referring back to the rear suspension assembly 30 and swing arm assembly 301, Figs. 5-7 illustrate how the power from the engine 50 is transmitted to the rear wheel 13 of the vehicle 10. The engine 50 has an output shaft 501 that is connected to a CVT 1000. The CVT 1000 described herein is intended to be exemplary of one possible CVT suitable for use in this three-wheeled vehicle. Any other known CVT (a CVT to be developed) also can be used with this vehicle, if desired.

Preferably, the CVT 1000 operates at the highest rpm (revolutions per minute) transmitted from the engine 50. As can be understood from the description below, there is a direct relation between the engine rpm and the operation of the CVT 1000 due to the mechanical connection. Thus, the CVT 1000 is controlled by the engine rather than the operator. It is also possible to add an electronic control to the CVT 1000 that would modify the direct mechanical relationship.

The CVT 1000 includes a drive pulley 502 connected to a driven pulley 503 by a belt 504. Driven pulley 503 is connected to a transmission shaft 505 having a small sprocket 506 in a gear box 507. (The gear box 507 is used if the engine employed cannot provide the appropriate range of rpm to directly connect the CVT 1000 driven pulley 503 with the final drive.) Small sprocket 506 is in turn connected to a large sprocket 508 by a chain 509, which can be adjusted by a chain tensioner 510. The large sprocket 508 is mounted to the transmission drive shaft 52 having at least a drive shaft sprocket 53. The drive shaft sprocket 53 is attached to a concentric sprocket 306 by a drive chain 54. The concentric sprocket 306 is supported about the swing arm axle 302 and includes a first sprocket connected to the output drive shaft 52 of the transmission 1000 and a second sprocket attached to the axle 132 of rear wheel 13 by a chain 307. By this arrangement, rotation of the transmission output drive shaft 52 causes the sprocket 53 to rotate and move the chain 54. Chain 54 moves concentric sprocket 306, which in turn moves the chain 307 and turns the rear wheel axle 132.

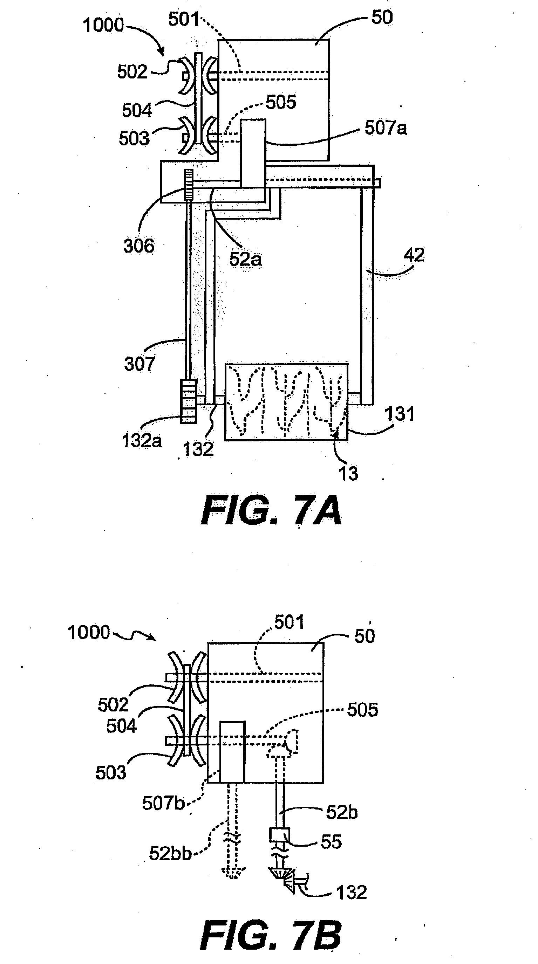

As seen in Fig. 5, the CVT 1000 is disposed on one side of the vehicle, offset from the longitudinal centerline. As can be appreciated from Fig. 7, the drive pulley 502 and driven pulley 503 are mounted at a fixed distance from each other.

Fig. 7A shows an alternative construction of the engine 50 and a gear box 507a. In this embodiment, the gear box 507a is enclosed within the engine 50 housing. The output drive shaft 52a extends directly from the gear box 507a from within the engine 50 to the concentric sprocket 306, which in this case Is also supported within the housing of the engine 50. The rear swing arm 42 is mounted for pivotal movement about the axis of the output drive shaft 52a on the other side of the gear box 507a on the side of the housing of the engine 50. It is also possible to mount the swing arm 42 on either side of the housing of the engine 50 with the gear box 507a positioned laterally between the arms of the swing arm assembly 42. The concentric sprocket 306 is then connected to a driven sprocket 132a of the rear axle 132 to drive the rear wheel 13 by a chain 307.

Fig. 7B shows another variation of the engine 50 and gear assembly 507b. In this embodiment, the gear box 507b is enclosed within the engine 50 housing. The output drive shaft 52b extends from the gear box 507b and the engine 50 to the driven axle 132 of wheel 13. An articulating connection 55, of any known type, may be provided in the output shaft 52b to allow for movement between the rear axle 132 and the engine 50. The output drive shaft 52b drives the rear axle 132 through a conventional geared arrangement. Thus, the concentric sprocket 306 and drive chain 307 of the other embodiments are not necessary. The dotted output shaft 52bb shows an alternative placement of the output shaft 52bb extending directly from the gear box 507b.

In still another alternative embodiment, which is not illustrated, it is possible that the transmission shaft 505 may be used as the transmission output drive shaft 52. In other words, it is contemplated that the gear box 507 may be eliminated altogether so that the transmission shaft 505 contains the drive shaft sprocket 53.

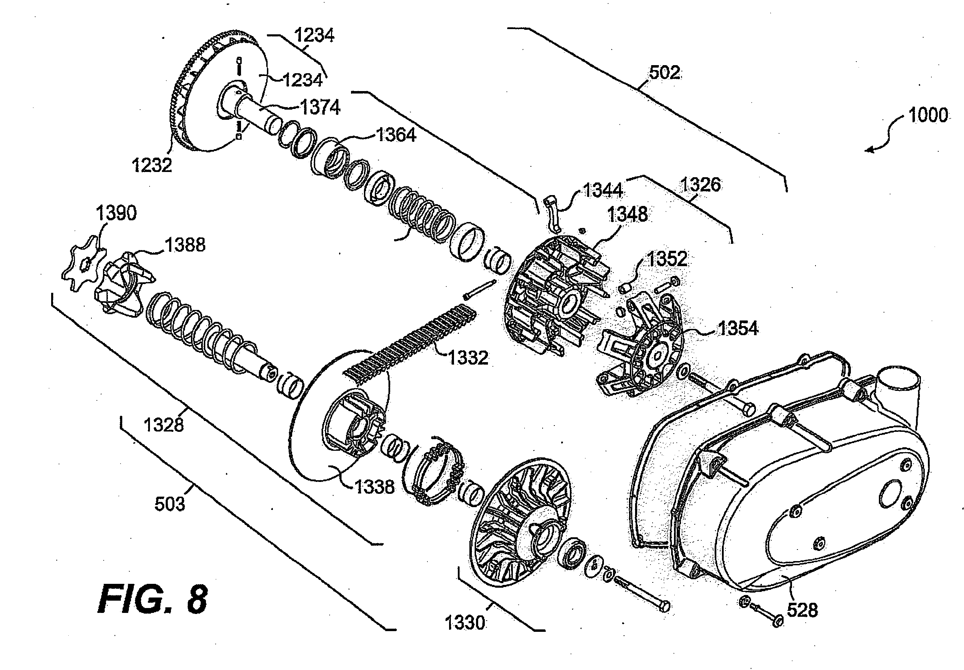

The CVT 1000 is shown in detail Figs. 8-22. The CVT 1000, which as noted above, includes the drive pulley 502 and the driven pulley 503, both of which have inner and outer halves. The inner half of the drive pulley is designated 1234. The outer half of the drive pulley is designated 1326. The driven pulley inner half is designated 1328 while the outer half is designated 1330.

Since the drive pulley 502 is connected to the output shaft 501 as illustrated in Figure 7, torque Is transmitted from the output shaft 501 to the drive pulley 502. A belt 504 connects the drive pulley 502 to the driven pulley 503, permitting the torque to be transmitted to the driven pulley 503. The belt 504 is a thick rubber belt having tapered sides. The belt 504 transmits a pulling force to the driven pulley 503. Alternatively, the belt 504 may be formed of metal, in which case the belt 504 may either transmit a pushing force or a pulling force to the driven pulley 503.

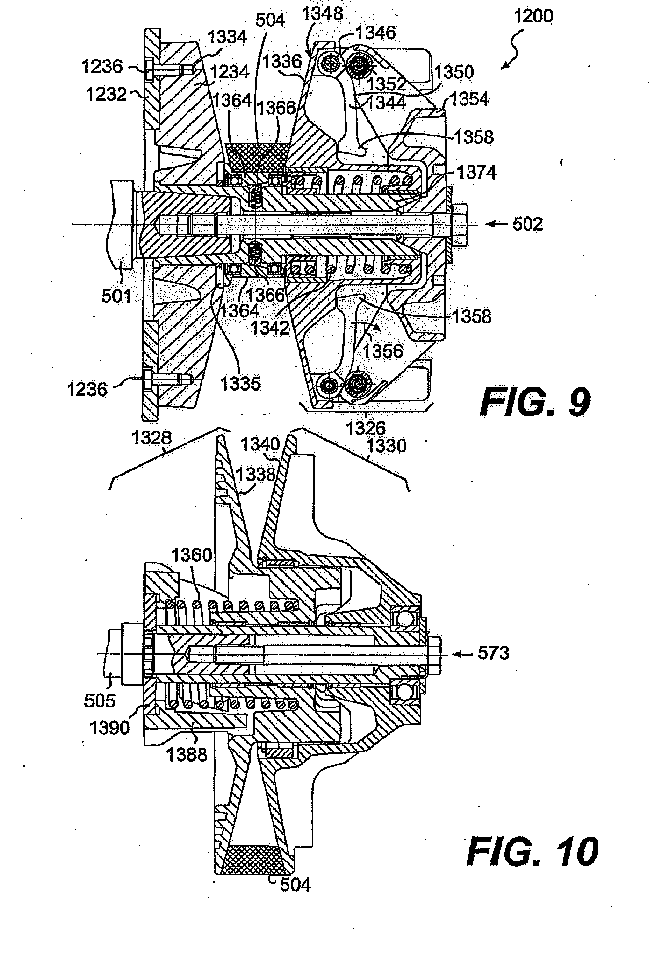

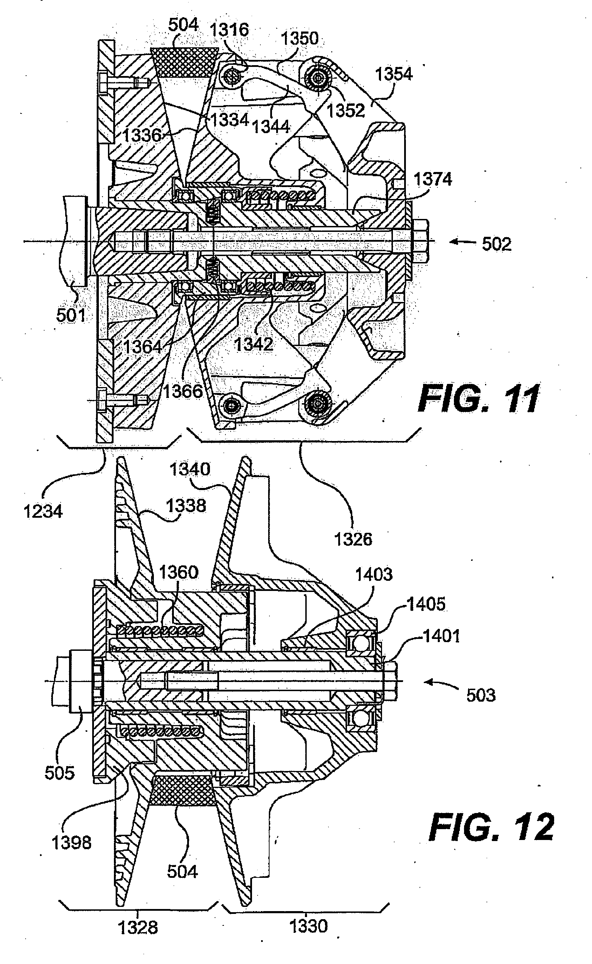

Figures 9 and 10 illustrate the positions of the drive pulley 502, the driven pulley 503, and the belt 504 when the engine 50 is operating at a low engine speed. Figures 11 and 12 illustrate the respective positions of the drive pulley 502, driven pulley 503 and belt 504 when the engine 50 is operating at high engine speeds. Any intermediate positions between these extremes would indicate that the engine 50 is operating at an intermediate speed.

The CVT 1000 operates in the following manner. The drive pulley inner half 1234 is provided with a belt engagement surface 1334. The drive pulley outer half 1326 is provided with a belt engagement surface 1336. Similarly, the driven pulley inner half 1328 includes a belt engagement surface 1338. Finally, the driven pulley outer half 1330 includes a belt engagement surface 1340: The belt 504 extends between the drive pulley 502 and the driven pulley 503 and, during operation, predominantly engages the belt engagement surfaces 1334, 1336 and 1338, 1340, respectively. The belt 504 transfers the torque of the engine 50 from the drive pulley 502 to the driven pulley 503.

The drive pulley inner half 1234 includes the starter gear 1232, which is connected thereto via one or more screws 1236. The drive pulley inner half 1234 is connected to the output shaft 501. The drive pulley outer half 1326 is biased by a drive pulley spring 1342 away from the drive pulley inner half 1234 when the engine 50 operates at low speeds.

The drive pulley outer half 1326 is provided with a number of centrifugal weights 1344 that are mounted to pivot axes 1346 disposed about the periphery of the rear surface of the drive pulley outer plate member 1348 that forms the belt engagement surface 1336. The outward surfaces 1350 of the centrifugal weights rest against rollers 1352 on the drive pulley roller member 1354.

The drive pulley spring 1342 exerts sufficient force on the drive pulley outer half 1326 to force the outer half 1326 away from the inner half 1234. In particular, the drive pulley spring 1342 exerts its force on the outer plate member 1348. The centrifugal weights 1344 on the outer plate member 1348, in turn, contact the roller member 1354. Due to the force exerted by the drive spring 1342, the centrifugal weights 1344 are in constant engagement with the rollers 1352. The force of the drive spring 1342 biases the outer half 1326 of the drive pulley 502 away from the inner half 1234, as shown in cross-section in Figure 9.

At low engine speeds, the inner half 1234 and the outer half 1326 of the drive pulley 502 are positioned as illustrated in Figure 9. However, at high speeds, the halves 1234, 1326 take the positions shown in Figure 11. The centrifugal weights 1344 are instrumental in making this transitional change. In particular, as the rotation speed of the drive pulley 502 increases, the centrifugal force on the centrifugal weights 1344 becomes sufficiently high that the centrifugal weights 1344 begin to swing outwardly-in the direction of arrow 1356. The greater the rotational speed, the greater the outward swing of the weights 1344 until the weights 1344 reach their maximum outward swing and the rollers 1352 rest against the stops 1358 on the centrifugal weights 1344. The maximum swing position is illustrated in Figure 11.

As the centrifugal weights 1344 swing outwardly, their outer surfaces 1350 press against the rollers 1352. This causes the drive pulley outer plate member 1348 and the roller member 1354 to separate from one another, collapsing the drive spring 1342. As a result, the belt engagement surface 1334, 1336 move toward one another. Since the belt 504 is angled to ride on the belt engagement surfaces 1334, 1336, and since it is effectively incompressible (albeit elastic), the belt 504 travels outwardly from the inner position shown in Figure 9 to the outer position illustrated in Figure 11.

Since the tension on the drive belt 504 must remain constant regardless of the position of the belt 504 in the CVT 1000, the driven pulley 503 acts in a manner opposite to that of the drive pulley 502. in particular, the driven pulley 503 includes a driven spring 1360 that forces the inner half of the driven pulley 1328 toward the outer half of the driven pulley 1330 in the rest (or low speed) condition. Therefore, when the engine 50 operates at a low speed, the inner and outer halves 1328, 1330 of the driven pulley 503 are at their closest point to one another, as illustrated in Figure 10.

When the engine 50 is operating at high speed, however, the tension on the belt 504, which must remain constant to avoid breakage of the belt 504, causes the inner and outer halves of the driven pulley 503 to separate. Accordingly, the belt 504 travels from its highest point as shown in Figure 10 to its lowest point, as illustrated in Figure 12.

The CVT 1000 disclosed herein is designed so that, if desired, it is possible to equip the three-wheeled vehicle 10 with a brake assembly that may be engaged while the engine 50 is operating. The CVT 1000 is also designed so that, if desired, the three-wheeled vehicle 10 may be towed or pushed so that the transmission can be used to start the engine 50. In both cases, the direction of the transmitted torque is changed from a positive direction (where the engine 50 drives the vehicle) to a negative direction (where the wheels 11, 12 drive the engine 50 or the engine 50 brakes the vehicle). The latter condition (i.e., the negative direction) will be referred to as a "reverse torque transmission" mode or an "RTT" mode in the description that follows.

Of course, it is also possible to use a CVT with the three wheeled vehicle disclosed herein that does not run in a reverse mode. In fact, it is contemplated that the CVT 1000 will not need to operate in an RTT mode of operation, because the engine 50 will be a unidirectional four-stroke engine. Where as RTT mode of operation is not used, the CVT 1000 will be connected to the rear tire 13 via a gearbox (not shown) that will provide a reverse gear. Such gearboxes are known in the art and, as a result, a detailed description is not provided herein.

Prior art CVTs with an RTT are known. These prior art CVTs, however, rely on conventional CVT design parameters. One example of such a CVT is made by Polaris®, a snowmobile manufacturer located in the United States. Polaris's snowmobile incorporates a CVT based on a poly-V-section belt/drive pulley combined with a conventional freewheel and clutch unit. The poly V-section belt and pulley engage one another when the belt is in the low speed position on the drive pulley (analogous to the position illustrated in Figure 11). This design, however, has at least one significant drawback. The elastic belt become significantly worn when it engages the pulley section and thus tends to fray, thereby greatly reducing its useful life.

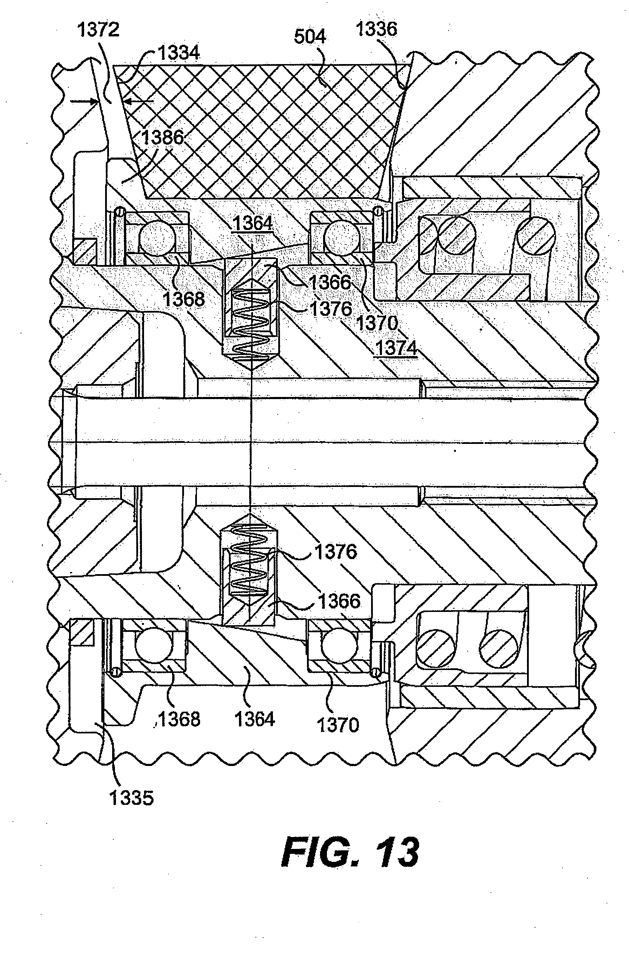

To overcome difficulties such as these, to provide the ability to brake the three-wheeled vehicle 10 when the engine 50 is operating, and to provide an RTT, a mechanism to permit free wheel operation was developed for the CVT 1000 of the present invention. In particular, the CVT 1000 of the present invention incorporates a slide sleeve 1364 on the drive pulley 502. The slide sleeve 1364 cooperates with one or more spring loaded pins 1366 to affect its operation. An enlarged view of the slide sleeve 1364 construction is provided in Figure 13.

The slide sleeve 1364 has two modes of operation. The first is the non-engaged mode where the slide sleeve 1364 permits the inner and outer halves 1234, 1326 of the drive pulley 502 to rotate without imparting any torque to the belt 504. This operational position is illustrated In Figure 10. The second operational mode permits the CVT 1000 to act as an RTT to impart torque from the wheel 13 of the three-wheeled vehicle 10 to the engine 50.

To permit free rotation of the slide sleeve 1364, the sleeve 1364 is journaled by two antifriction bearings 1368, 1370 on shaft 1374. In operation, when the engine 50 is operating at low speeds, the belt 504 engages the slide sleeve 1364. At low operational speeds of the engine 50, the inner and outer halves 1234, 1326 of the drive pulley 502 do not clamp the belt 504 between them. In fact, as illustrated in Figures 9 and 13, while the belt 504 is shown as abutting the belt engagement surface 1336, there is a gap 1372 at least between the belt and the inner half 1234 of the drive pulley 502. Preferably, a gap also exists between the belt 504 and the belt engagement surface 1336. Accordingly, the slide sleeve 1364 is permitted to float on the underlying shaft 1374 while the inner and outer halves 1234, 1326 of the drive pulley 502 rotate. More accurately, the shaft 1374 rotates beneath the slide sleeve 1364. As a result, the slide sleeve 1364 and belt 504 are stationary during low speed operation of the engine 50, especially during idle speed.

When the rotational speed of the engine 50 exceeds a predetermined threshold, the centrifugal weights 1344 begin their outward swing, causing the outer half 1326 of the drive pulley 502 to move toward the inner half 1234, clamping the belt 504 between them. Once this occurs, torque from the engine 50 is transmitted to the driven pulley 503, where it is transmitted to the wheels 11, 12.

The slide sleeve 1364 permits the construction of a brake assembly 1362, which may be engaged while the engine 50 is operating. Without the slide sleeve 1364, torque from the engine 50 always would be transferred to the CVT 1000. As a result, even if the engine 50 were operating at low speeds, the wheels 11, 12 would be encouraged to move and the vehicle 10 would have a tendency to creep forward. With the slide sleeve 1364, however, the belt 504 does not transfer torque to the driven pulley 503, which means that the vehicle 10 does not have a tendency to creep forward. As a result, the brake assembly 1362 maybe engaged even while the engine 50 is operating without fear of damage to the brake assembly 1362.

So that the slide sleeve 1364 also permits the CVT 1000 to operate as an RTT, at least one pin 1366, but preferably two or more pins 1366, biased outwardly with a spring 1376, projects from the shaft 501. Preferably, the pin 1366 is hexagonally shaped but, as would be understood by those skilled in the art, the pin 1366 could take any suitable shape. In particular the pin 1366 could be replaced by a ball bearing disposed at the top of the spring 1376 so that it engages the inside of the slide sleeve 1364.

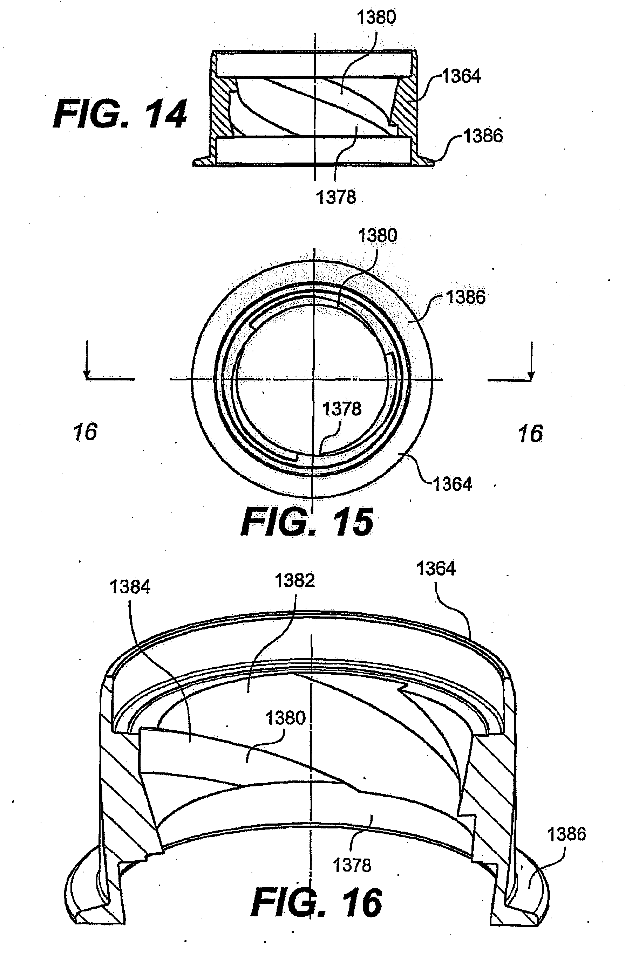

Various views of the slide sleeve 1364 are provided in Figures 14-16. These views highlight the construction of the inner surface 1378 of the slide sleeve 1364, which includes at least one helically-shaped groove 1380. As illustrated in Figure 15, three helically shaped grooves 1380 are preferably provided. One pin 1366 preferably engages each groove 1380.

The grooves are shaped to be shallow 1382 in one direction and steep 1384 in another. The shallow sides 1382 permit the pins 1366 to slide over them when the engine 50 operates in the forward direction (positive torque), in other words, the shallow sides 1382 of the grooves do not engage the pins 1366. Moreover, the shallow sides 1382 are shallow enough that the pins 1366 generate little noise as they move over the grooves 1380 during forward operation of the engine 50.

The steep portions 1384 of the grooves 1380 permit the slide sleeve 1364 to operate as an RTT. In particular, If the vehicle 10 is pushed forward so that the torque from the wheels 11,12 is applied to the slide sleeve 1364, the pins 1366 will engage the groove 1380, hold the slide sleeve 1364 stationary with respect to the shaft 1374, and, thereby, transfer the torque from the wheels 11,12 to the engine 50. The shallower guide paths can result in less noise from the pins moving over the guide paths. The number and width of the guide paths can be varied as desired.

In addition, on one side, the slide sleeve 1364 includes an annular, flange-shaped end 1386 with an external radius larger than that of the remaining portion of the slide sleeve 1364. This annular flange 1386 serves as catch flank for the elastic belt 504 so as to press it against the outer part 1326 of the drive pulley 502 during the RTT-mode, which is Illustrated in Figure 13. The axial pressing effect is achieved by co-action with the spiral grooves 1380 and the pins 1366. The flange 1386 preferably has a minimum height so as to not ride under the belt 504. In addition, the flange 1386 preferably has a maximum height so as to not overly reduce the effective belt engagement surface 1334 of the drive pulley inner half 1234.

As illustrated in Figures 9 and 13, the belt engagement surface 1334 of the drive pulley inner half 1234 includes a recess 1335 that accommodates the flange 1386. As such, there is a smooth transition as the belt 504 moves outwardly within the drive pulley 502 from the slide sleeve 1364.

The drive spring 1342 serves one additional function with respect to the slide sleeve 1364. On one hand, it serves to enable the starting position of the drive pulley 502 when the engine 50 stands still as illustrated in Figure 9. On the other hand, it functions to return the catch flank 1386 of the slide sleeve 1364 into its starting position during normal operation. This prevents the flange 1386 from catching the belt 504 as it moves down the drive pulley 502 when the engine speed decreases.

If the engine 50 is started by thrust and the belt 504 is pressed by the flange 1386 against the outer pulley part 1326 of the drive pulley 502, a connection is made between the pulley halves 1234, 1326 and the elastic belt 504 via the flank sides of the belt 504. The minimum coupling speed can be designed into the CVT 1000 so that the belt 504 must move at a sufficient speed before the RTT mode will engage. Once engaged, as the speed of the belt 504 (or number of revolutions of the drive pulley 502) increases, the centrifugal weights 1344 will move outwardly. This will cause the drive pulley outer plate member 1348 to move inwardly, clamping the belt 504 between the belt engaging surfaces 1334, 1336.

During normal operation (e.g., non-RTT operation), it is preferred to maintain as constant a tension in the elastic belt 504 as possible, because a constant tension will ensure satisfactory torque transmission from the drive pulley 502 to the driven pulley 503. The driven pulley 503 assures that the tension on the belt 504 remains constant. The inner half 1328 of the driven pulley 504 is instrumental here.

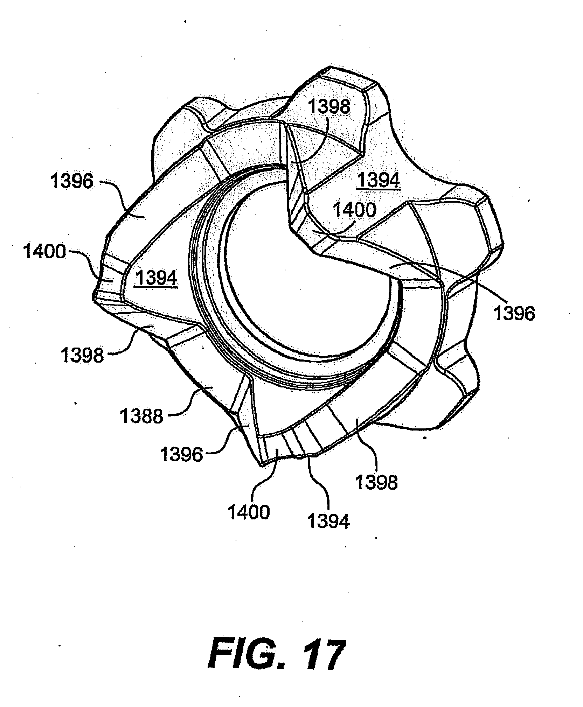

The inner half 1328 of the driven pulley 503 includes a guide member 1388. The guide member 1388 is illustrated in greater detail in Figure 17. The guide member 1388 engages with a toothed wheel 1390, which Is fixedly connected to the driven-side axle 505. The guide member 1388 and the inner half 1328 of the driven pulley 503 are mutually engaged via projections 1394. As illustrated in Figure 17, three two-sided projections 1394 are preferred for guide member 1388. However, as would be understood by those skilled in the art, any number of projections 1394 may be employed. The projections 1394 enable the guide member 1388 and the inner half 1328 of the driven pulley 503 to slide into each other and to slide apart from one another during operation.

Each of the projections 1394 include a normal operation ramp 1396 and an RTT operation ramp 1398, which are engaged alternatively depending on the operation of the CVT 1000. The shapes of the ramps 1396,1398 are designed for each of the two operation types. In particular, the normal operation ramps 1396 are given a steep slope. The RTT ramps 1398, however, are not given as steep a slope as the normal operation ramps 1396. The outer ends (the flank region) of the projections 1394 are designed to be flat, which helps to maintain the tension in the belt 504 approximately constant, e.g., when the vehicle is pushed or towed to start the engine 50 (RTT mode of operation). The flat portions 1400 of the RTT ramps 1398 increase the force applied by the inner half 1328 to the outer half 1330, thereby' compensating for the lack of force (or reduced force) applied by the expanded driven spring 1360 and the inactive centrifugal weights 1344. The flat portion 1400 of the projections 1394 preferably are provided with approximately a 15° inclination.

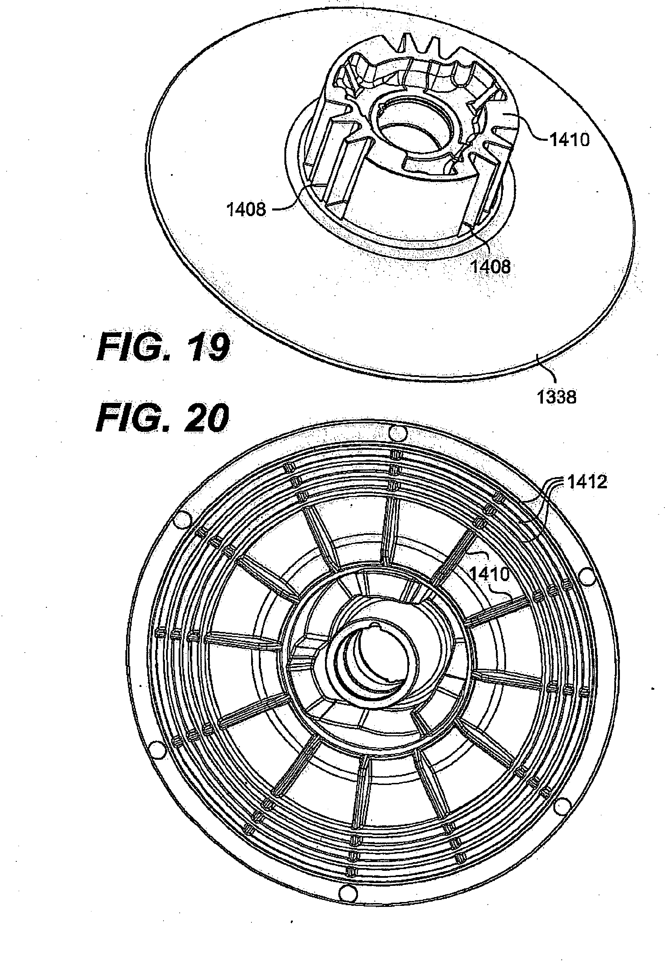

During RTT operation of the CVT 1000, the RTT ramps engage corresponding surfaces on the interior of the inner half of the driven pulley 503, which are illustrated in Figure 20. The gearing characteristics of the guide member 1388 may be determined by the shape and slope of the corresponding ramps 1396, 1398.

The guide member 1388 preferably is made of a synthetic material. Besides providing a lightweight construction, a synthetic material also offers a great acoustic advantage since the noise development at the onset of driving, when the two ramps collide, is greatly reduced as compared to other materials. Preferably, the guide member 1388 is made from fiberglass. For example, it is contemplated that the guide member 1388 may be constructed from a carbon fiber material. Of course, as would be appreciated by those skilled in the art, other materials may be selected therefore without deviating from the scope of the present invention.

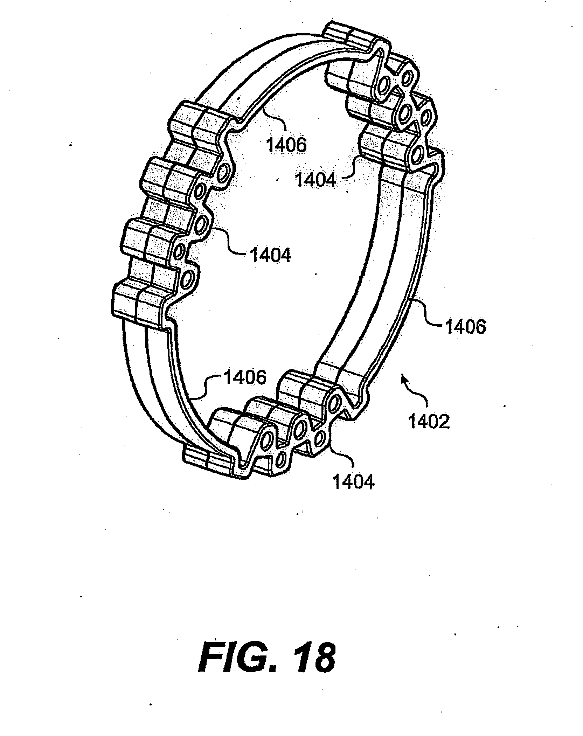

The outer half 1330 of the driven pulley 503 is operationally coupled to the inner half 1328 through a connector 1402, which is illustrated in greater detail in Figure 18, The connector, which is preferably made of a material that is at least 2% Teflon^{®} (polytetrafluaroethylene), includes ribbed sections 1404 connected by non-ribbed sections 1406. The ribbed sections 1406 engage similarly-shaped indentations 1408 on the hub 1410 of the inner half 1328 of the driven pulley 503, as shown in Figure 19. White not shown, the ribbed sections 1404 also engage similar indentations on the outer half 1330 of the driven pulley 503.

The outer and inner halves 1330, 1328 of the driven pulley 503 are journaled on the pulley shaft 505 by both slide bearings 1403 and ball bearings 1405. Thus, they are not rigidly coupled to the shaft 505. The transmission of torque from the pulley shaft 505 to the driven pulley 503 is accomplished solely by the guide member 1388 and its associated ramps 1398, 1398. In contrast to CVT constructions known in the prior art, where the outer half of the driven pulley is rigidly fixed to the driven pulley shaft, the outer half 1330 and the pulley shaft 505 in the CVT 1000 of the present invention are decoupled. The decoupling of these two elements eliminates or at least greatly reduces torsional vibrations which are otherwise caused by the inertia of the outer half of the driven pulley. Furthermore, the connector 1402 prevents relative movement between the inner and outer halves 1328,1330 of the driven pulley 503, which reduces considerably slip and friction between the belt 504 and the pulley halves 1328, 1330.

As illustrated in Figure 20, the inner surface of the inner half 1328 of the driven pulley 503 includes radial ribs 1410 and circumferential ribs 1412. These ribs 1410, 1412 increase to structural strength of the half 1328 to prevent micro-cracks from forming during operation.

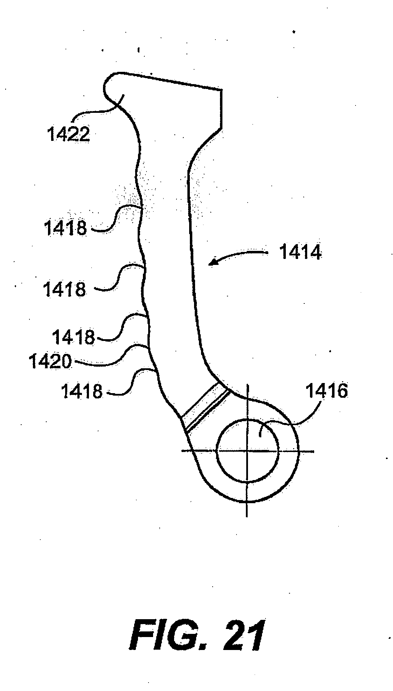

Figure 21 illustrates on alternative embodiment of the centrifugal weights 1344. In Figure 21, a centrifugal weight 1414 is illustrated. The centrifugal weight 1414 includes a hole 1416 at one end that may be pivotally connected to the drive pulley outer plate 1336. The centrifugal weight 1414 is essentially the same as the centrifugal weight 1344, except that the centrifugal weight 1414 includes a plurality of indentations 1418 along its outer surface 1420, inward from the stop 1422. The indentations 1418 are designed to delay the advancement of the centrifugal weights 1414 as they pivot outwardly against the rollers 1352. When provided with the indentations 1418, the centrifugal weights 1414 behave such that the operator feels like the vehicle 10 is changing gears.

Specifically, the wave-type geometry on the outer surfaces 1420 of the centrifugal weights 1414 defines the indentations 1418. The rollers 1352 will come to rest in one of the wave indentations 1418 only within a certain range of engine speeds. Only when a certain engine speed limit is exceeded will the rollers 1352 advance to the next indentation 1418, thus, progressing in a step-wise fashion to simulate changes from a lower gear to a higher one.

Alternatively, while specific outer surfaces 1350,1420 are illustrated for the centrifugal weights 1344, 1414, there are many alternative shapes that may be applied. It is expected that different shapes will influence the operation of the CVT 1000 to change the operational characteristics of the vehicle 10. Specifically, the geometry of the outer surface 1350, 1420 conceivably could offer more/less aggressive operational characteristics for the vehicle 10. In addition, the centrifugal weights 1344, 1414 do not all need to be the same shape. It is envisioned that weights 1344, 1414 of differing shapes could be positioned about the periphery of the drive gear 501 to alter or control the operational, characteristics of the vehicle 10.

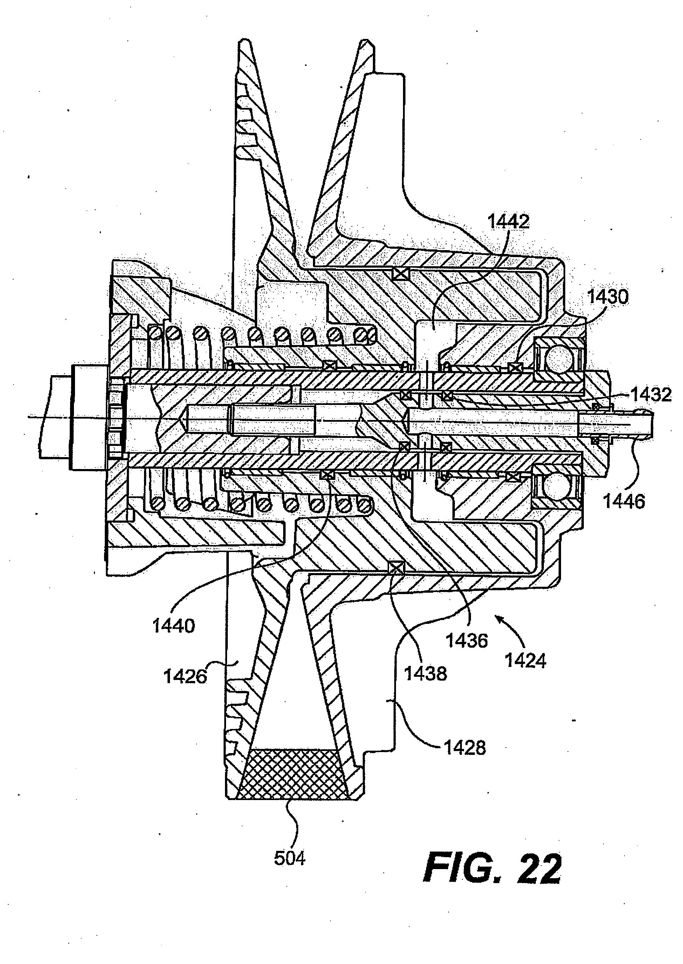

Figure 22 illustrates an alternative embodiment of a driven pulley, which is a pneumatically-actuated driven pulley 1424. In the pneumatic driven pulley 1424, movement between the inner half 1426 and the outer half 1428 of the pulley 1424 is actuated pneumatically, preferably with vacuum pressure from the crankcase of the engine 50. In this embodiment, guide member 1388 may be eliminated altogether. Alternatively, guide member 1388 may be provided, so that the driven pulley 1424 may continue to operate even upon loss of pneumatic control.

So that the pneumatically driven pulley 1424 may operate, a number of seals 1430, 1432, 1434, 1436, 1438, 1440 are provided between the inner half 1426 and the outer half 1428. The application of vacuum to the inner chamber 1442 via the vacuum connector 1446 draws the two halves 1426, 1428 together to provide a tight clamping force on the belt 504 positioned therebetween. The vacuum can be supplied by a pneumatic coupling (not shown) mounted to the CVT cover 528 that allows vacuum to be selectively supplied from the engine 50 (or other vacuum source, such as a vacuum pump) to chamber 1442 via connector 1446.

It is expected that this type of driven pulley 1424 should be especially effective for providing engine braking to the three-wheeled vehicle 10. In particular, upon deceleration of the engine 50, the throttle will be closed, resulting in a high vacuum in the engine 50, which will provide a strong clamping force between the two halves 1426, 1428. As a result, the belt 504 will be clamped more tightly between the pulley halves 1426, 1428 as compared with other driven gears for CVTs. This means that engine braking may be applied effectively from the engine 50 to the vehicle 10. Alternatively, a pressure chamber could be positioned on the opposite side of pulley half 1426 such that a pressure source (rather than a vacuum source) could be used to clamp the pulley halves 1426, 1428 together. Furthermore, it is contemplated that a vacuum valve may be provided to control vacuum pressure. If provided, it is contemplated that the vacuum valve could be a solenoid whose operation is controlled by the electronic control unit (or "ECU") of the engine 50. Moreover, the pneumatic arrangement may be replaced by any fluid pressure system, including hydraulics.

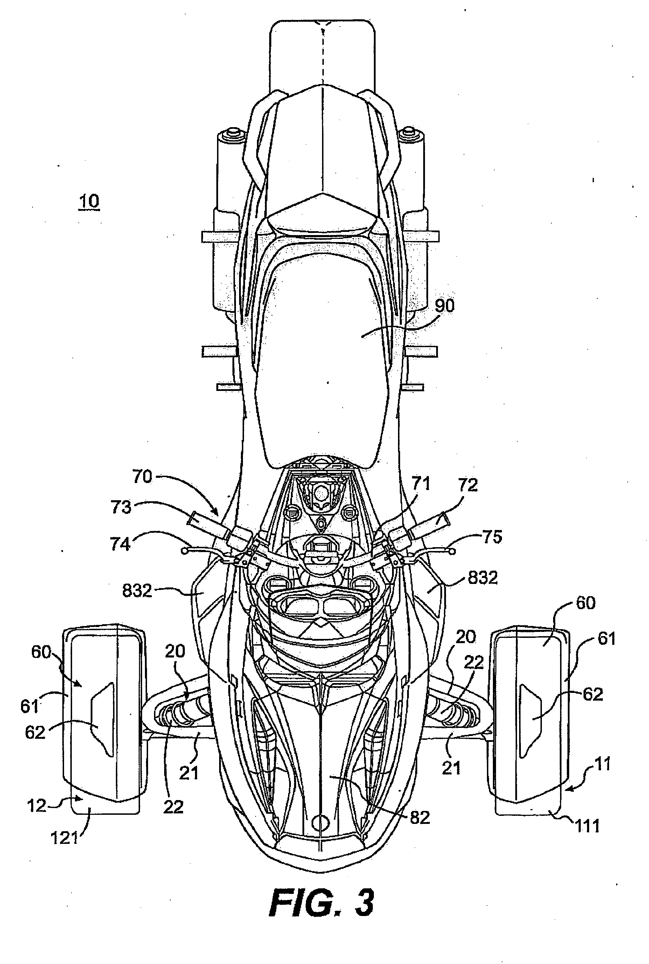

As noted above, it is preferred that the three-wheeled vehicle 10 of this invention be provided with a CVT to eliminate the problem of shifting gears with the driver's foot as in conventional geared systems. The addition of the CVT allows the driver to lean into turns and lift his or her foot off the foot peg during leaning. If a CVT is used, left side shifting control would not be required. In that case, the handle bar 71 would carry different controls. The vehicle 10 would preferably be provided with additional bonus braking controls on the left handle bar 72. The right handle bar 73 would carry the front wheel brake 74, as is customary, and the left handle bar 72 would carry front and rear braking control 75, as seen in Fig. 3.

As noted above, however, use of a CVT is not required, and the three-wheeled vehicle 10 can also be used with an engine 50 connected to standard gearing. In that configuration, the arrangement of the foot pedals and handle bars normally associated with a motorcycle and an all terrain vehicle (ATV) would be used. In particular, the gearing would be positioned on the left of the driver, with the gear shifter being the left foot pedal. The right handle bar would carry the front wheel brake, and the right foot peg would control the braking of the front and rear wheel. This arrangement has the advantage of easy and familiar use by drivers accustomed to driving ATVs and motorcycles. Standard gearing may also be preferred for racing vehicles for more precise shifting control.

Other conventional components of a drive system and a road vehicle are provided as seen in the figures but need not be described in detail as one of ordinary skill in the art would readily recognize the remaining components.

All of the above noted dimensions are provided for purposes of description and are in no way intended to be limiting. The various parameters could of course be varied and remain within the scope of the invention. Further, the size of the various components that may appear in the drawings can vary from the size shown.

The embodiments described herein are intended to be illustrative of this invention. As will be recognized by those of ordinary skill in the art, various modifications, combination of features, equivalent arrangements and changes can be made and would remain within the scope of the invention defined in the appended claims.

## Claims

1. A three-wheeled vehicle (10), comprising:
a tubular frame (40);
an engine (50) supported by the frame (40);
a rear suspension swing arm (301) pivotally connected to the frame (40);
a pair of front wheels (11,12) supported by the frame (40) and a single rear wheel (13) supported by the rear swing arm (301), the rear wheel (13) being operatively connected to the engine (50) such that the engine drives the rear wheel;
tires (111,121,131)mounted on each of the wheels (11,12,13), wherein the tires are suitable for road use;
a straddle seat (90) supported by the frame (40) disposed between the front wheels (11,12) and the rear wheel (13); and
a continuously variable transmission (1000) (CVT) operatively connected between the engine (50) and the rear wheel (13) wherein the continuously variable transmission comprises a drive pulley adapted to connect to a crankshaft of the engine, a driven pulley connected to an output shaft, and a belt (504) having a first side and a second opposed side operatively connected between the drive pulley (502) and the driven pulley (503), wherein the drive pulley (502) comprises:
a drive pulley inner half (1234) rotatably disposed on the crankshaft (501), the drive pulley inner half (1234) having a belt engagement surface (1334) associated therewith adapted to engage the first side of the belt (504),
a drive pulley outer half (1326) rotatably disposed on the crankshaft (501), the drive pulley outer half (1326) having a belt engagement surface (1336) associated therewith adapted to engage the second side of the belt (504), and
wherein the driven pulley (502) comprises:
a driven pulley inner half (1328) disposed on an axle (505), the driven pulley inner half having a belt engagement surface (1338) associated therewith adapted to engage the first side of a belt (504),
a driven pulley outer half (1330) disposed on the axle (505), the driven pulley outer half having a belt engagement surface (1340) associated therewith adapted to engage the second side of the belt (504), and
a spring (1360) biasing the driven pulley inner half (1328) and the driven pulley outer half (1330) together with one another.

2. The three-wheeled vehicle (10) of claim 1, wherein the drive pulley outer half (1326) further comprises at least one centrifugal weight (1344) pivotally mounted thereto so that the centrifugal weight swings outwardly upon application of a centrifugal force, applies a pressing force against an associated roller (1352) disposed on the drive pulley outer half (1326), and causes the drive pulley outer half belt engaging surface (1326) to move towards the drive pulley inner half belt engaging surface (1334), sandwiching the belt (504) therebetween.

3. The three-wheeled vehicle (10) of claims 1 or 2, wherein the drive pulley further comprises a slide sleeve (1364) disposed on a shaft (1374) adapted to engage the inner side of the belt (504) wherein the slide sleeve (1364) freely rotates with respect to the shaft (1374) when the belt (504) is engaged thereby and the belt either is stationary or travels in a first direction, and wherein the slide sleeve (1364) is fixed with respect to the shaft (1374) when the belt travels in a second direction, opposite to the first direction

4. The three-wheeled vehicle (10) of any one of claims 1 to 3, wherein the drive pulley further comprises a spring (1376) biasing the drive pulley inner half (1234) and the drive pulley outer half (1326) apart from one another.

5. The three-wheeled vehicle (10) of any one of claims 1 to 4, wherein the driven pulley further comprises a connector (1402) rotatably coupling the driven pulley inner half (1328) with the driven pulley outer half (1330), wherein the connector is disposed between the driven pulley inner half and the driven pulley outer half.

6. The three-wheeled vehicle (10) of any one of claims 1 to 5, wherein the driven pulley further comprises a guide member (1388), the guide member having at least a first ramp (1396) having a first slope.

7. The three-wheeled vehicle (10) of claim 6, wherein the guide member (1388) further comprises a second ramp (1398) with at least one second slope that is less than the at least one first slope, wherein the first ramp is adapted to engage the driven pulley inner half (1328) during a normal mode of operation of the driven pulley (503), and wherein the second ramp is adapted to engage the driven pulley inner half (1328) during a reverse torque transmission mode of operation of the driven pulley (503).

8. The three-wheeled vehicle (10) of claim 3, further comprising a gear box (507) operatively connected between the CVT (1000) and the rear wheel (13) to provide a gear reduction therebetween.

9. The three-wheeled vehicle (10) of claim 8, wherein the gear box (507) is enclosed within an housing of the engine (50).

10. The three-wheeled vehicle (10) of claim 8, further comprising a transmission shaft (505) connecting the driven pulley (503) of the CVT (1000) and the gear box (507).

11. A three-wheeled vehicle (10), comprising:
a tubular frame (40);
an engine (50) supported by the frame (40);
a rear suspension swing arm (301) pivotally connected to the frame (40);
a pair of front wheels (11,12) supported by the frame (40) and a single rear wheel (13) supported by the rear swing arm (301), the rear wheel (13) being operatively connected to the engine (50) such that the engine drives the rear wheel;
tires (111,121,131)mounted on each of the wheels (11,12,13), wherein the tires are suitable for road use;
a straddle seat (90) supported by the frame (40) disposed between the front wheels (11,12) and the rear wheel (13); and
a continuously variable transmission (1000) (CVT) operatively connected between the engine (50) and the rear wheel (13) wherein the continuously variable transmission comprises a drive pulley adapted to connect to a crankshaft of the engine, a driven pulley connected to an output shaft, and a belt (504) having a first side and a second opposed side operatively connected between the drive pulley (502) and the driven pulley (503), wherein the drive pulley (502) comprises:
a drive pulley inner half (1234) rotatably connected to the crankshaft (501), the drive pulley inner half (1234) having a belt engagement surface (1334) associated therewith adapted to engage the first side of the belt (504),
a drive pulley outer half (1326) rotatably connected to the crankshaft (501), the drive pulley outer half (1326) having a belt engagement surface (1336) associated therewith adapted to engage the second side of the belt (504), and
wherein the driven pulley (502) comprises:
a driven pulley inner half (1328) disposed on an axle (505), the driven pulley inner half having a belt engagement surface (1338) associated therewith adapted to engage the first side of a belt (504),
a driven pulley outer half (1330) disposed on the axle (505), the driven pulley outer half having a belt engagement surface (1340) associated therewith adapted to engage the second side of the belt (504); and
a gear box (507) operatively connected between the CVT (1000) and the rear wheel (13) to provide a gear reduction therebetween.

12. The three-wheeled vehicle (10) of claim 11, wherein the gear box (507) is enclosed within the housing of the engine (50).

13. The three-wheeled vehicle (10) of claim 12, further comprising a transmission shaft (505) connecting the driven pulley (503) of the CVT (1000) and the gear box (507).

14. The three-wheeled vehicle (10) of any one of claims 11 to 13, wherein the drive pulley outer half (1326) further comprises at least one centrifugal weight (1344) pivotally mounted thereto so that the centrifugal weight swings outwardly upon application of a centrifugal force, applies a pressing force against an associated roller (1352) disposed on the drive pulley outer half (1326), and causes the drive pulley outer half belt engaging surface (1326) to move towards the drive pulley inner half belt engaging surface (1334), sandwiching the belt (504) therebetween.

15. The three-wheeled vehicle (10) of any one of claims 11 to 14, wherein the drive pulley further comprises a slide sleeve (1364) disposed on a shaft (1374) adapted to engage the inner side of the belt (504) wherein the slide sleeve (1364) freely rotates with respect to the shaft (1374) when the belt (504) is engaged thereby and the belt either is stationary or travels in a first direction, and wherein the slide sleeve (1364) is fixed with respect to the shaft (1374) when the belt travels in a second direction, opposite to the first direction

16. The three-wheeled vehicle (10) of any one of claims 11 to 15, wherein the drive pulley further comprises a spring (1376) biasing the drive pulley inner half (1234) and the drive pulley outer half (1326) apart from one another.

17. The three-wheeled vehicle (10) of any one of claims 11 to 16, wherein the driven pulley further comprises a connector (1402) rotatably coupling the driven pulley inner half (1328) with the driven pulley outer half (1330), wherein the connector is disposed between the driven pulley inner half and the driven pulley outer half.

18. The three-wheeled vehicle (10) of any one of claims 11 to 17, wherein the driven pulley further comprises a guide member (1388), the guide member having at least a first ramp (1396) having a first slope.

19. The three-wheeled vehicle (10) of claim 18, wherein the guide member (1388) further comprises a second ramp (1398) with at least one second slope that is less than the at least one first slope, wherein the first ramp is adapted to engage the driven pulley inner half (1328) during a normal mode of operation of the driven pulley (503), and wherein the second ramp is adapted to engage the driven pulley inner half (1328) during a reverse torque transmission mode of operation of the driven pulley (503).

20. The three-wheeled vehicle (10) of claim 15, wherein the slide sleeve further comprises at least one groove (1380) disposed on an inner surface (1378) of the slide sleeve (1364); and
at least one pin (1366) extending from the shaft (1374), the pin being biased to engage the at least one groove when the belt (504) travels in the second direction.

21. A three-wheeled vehicle (10), comprising:
a tubular frame (40);
an engine (50) supported by the frame (40);
a rear suspension swing arm (301) pivotally connected to the frame (40);
a pair of front wheels (11,12) supported by the frame (40) and a single rear wheel (13) supported by the rear swing arm (301), the rear wheel (13) being operatively connected to the engine (50) such that the engine drives the rear wheel;
tires (111,121,131)mounted on each of the wheels (11,12,13), wherein the tires are suitable for road use;
a straddle seat (90) supported by the frame (40) disposed between the front wheels (11,12) and the rear wheel (13); and
a continuously variable transmission (1000) (CVT) operatively connected between the engine (50) and the rear wheel (13) wherein the continuously variable transmission comprises a drive pulley adapted to connect to a crankshaft of the engine, a driven pulley connected to an output shaft, and a belt (504) having a first side and a second opposed side operatively connected between the drive pulley (502) and the driven pulley (503), wherein the drive pulley (502) comprises:
a drive pulley inner half (1234) rotatably connected with the crankshaft (501), the drive pulley inner half (1234) having a belt engagement surface (1334) associated therewith adapted to engage the first side of the belt (504),
a drive pulley outer half (1326) rotatably connected with the crankshaft (501), the drive pulley outer half (1326) having a belt engagement surface (1336) associated therewith adapted to engage the second side of the belt (504), and
wherein the driven pulley (502) comprises:
a driven pulley inner half (1328) disposed on an axle (505), the driven pulley inner half having a belt engagement surface (1338) associated therewith adapted to engage the first side of a belt (504),
a driven pulley outer half (1330) disposed on the axle (505), the driven pulley outer half having a belt engagement surface (1340) associated therewith adapted to engage the second side of the belt (504), and
an inner chamber (1442) formed between the driven pulley inner half (1328) and the driven pulley outer half (1330), the inner chamber (1442) being sealed from the atmosphere such that fluid pressure created within the inner chamber (1442) can move the driven pulley inner half (1328) with respect to the driven pulley outer half (1330).

22. The three-wheeled vehicle (10) of claim 21, further comprising a connector (1446) in fluid communication with the inner chamber (1442):

23. The three-wheeled vehicle (10) of claim 22, further comprising a gear box (507) operatively connected between the CVT (1000) and the rear wheel (13) to provide a gear reduction therebetween.

24. The three-wheeled vehicle (10) of claim 23, wherein the gear box (507) is enclosed within the housing of the engine (50).

25. The three-wheeled vehicle (10) of claim24, further comprising a transmission shaft (505) connecting the driven pulley (503) of the CVT (1000) and the gear box (507).

26. The three-wheeled vehicle (10) of any one of claims 21 to 25, wherein the drive pulley outer half (1326) further comprises at least one centrifugal weight (1344) pivotally mounted thereto so that the centrifugal weight swings outwardly upon application of a centrifugal force, applies a pressing force against an associated roller (1352) disposed on the drive pulley outer half (1326), and causes the drive pulley outer half belt engaging surface (1326) to move towards the drive pulley inner half belt engaging surface (1334), sandwiching the belt (504) therebetween.

27. The three-wheeled vehicle (10) of any one of claims 21 to 26, wherein the drive pulley further comprises a slide sleeve (1364) disposed on a shaft (1374) adapted to engage the inner side of the belt (504) wherein the slide sleeve (1364) freely rotates with respect to the shaft (1374) when the belt (504) is engaged thereby and the belt either is stationary or travels in a first direction, and wherein the slide sleeve (1364) is fixed with respect to the shaft (1374) when the belt travels in a second direction, opposite to the first direction

28. The three-wheeled vehicle (10) of any one of claims 21 to 27, wherein the drive pulley further comprises a spring (1376) biasing the drive pulley inner half (1234) and the drive pulley outer half (1326) apart from one another.

29. The three-wheeled vehicle (10) of any one of claims 21 to 28, wherein the driven pulley further comprises a connector (1402) rotatably coupling the driven pulley inner half (1328) with the driven pulley outer half (1330), wherein the connector is disposed between the driven pulley inner half and the driven pulley outer half.

30. The three-wheeled vehicle (10) of any one of claims 21 to 29, wherein the driven pulley further comprises a guide member (1388), the guide member having at least a first ramp (1396) having a first slope.
